# FASCICULE DE BREVET EUROPEEN

(11) **EP 0 594 925 B1**
(45) Date de publication et mention de la délivrance du brevet: **14.08.1996**
(21) Numéro de dépôt: 92870179.6
(22) Date de dépôt: 30.10.1992
(51) Int. Cl.: B60N 3/04

(54) **Eléments de surhabillage de sols destinés à des véhicules automobiles**
Bodenbelagelemente für Kraftfahrzeuge
Floor covering elements for automotive vehicles

(43) Date de publication de la demande: 04.05.1994
(73) Titulaire: SOMMER S.A., F-92022 Nanterre Cédex (FR)
(72) Inventeur: Hennequin, Frédéric, F-08210 Mouzon (FR)
(74) Mandataire: Van Malderen, Michel

(56) Documents cités:
- EP-A- 0 177 664
- EP-A- 0 311 736
- DE-A- 3 113 637
- US-A- 4 748 063
- US-A- 4 751 764

## Description

### Objet de l'invention

La présente invention concerne des éléments de surhabillage de sols destinés à des véhicules automobiles qui sont facilement amovibles mais qui garantissent également une stabilité de positionnement satisfaisant.

### Arrière-plan et état de la technique

L'habillage normal de sols des véhicules automobiles consiste habituellement en un recouvrement à l'aide d'un tapis ou d'une moquette, le plus souvent constitué d'un aiguilleté (du type plat, bouclé, etc...) ou d'un tuft recouvrant tout le fond de la caisse et une partie des parois latérales et sur lequel viennent se monter les équipements du véhicule. Des découpes sont généralement prévues pour le passage des pédales, du levier de changement de vitesse, etc... Ce tapis est donc fixé à demeure et est inamovible.

Il est habituel pour des modèles haut de gamme que le constructeur monte d'origine une série d'éléments amovibles tels que des surtapis, des talonnettes, etc...

Des éléments amovibles de ce type dits de seconde monte sont vendus également dans le commerce d'accessoiriste afin de permettre aux utilisateurs de compléter l'équipement de leur voiture.

Il convient de noter que tout type de surhabillage (de monte d'origine ou de seconde monte) qui entraîne un risque de voir l'équipement glisser sous les pédales en créant ainsi un risque d'accident ou seulement un désagrément de conduite entraîne un rejet de ce type de solution à la fois par le constructeur automobile et par les utilisateurs.

Dans le cas des talonnettes de monte d'origine, celles-ci sont actuellement soudées par haute fréquence ou collées sur le tapis de façon définitive car il n'existe pas de solution satisfaisante garantissant à la fois une fixation suffisante pour éviter un arrachement accidentel et un caractère amovible simple et rapide.

On a déjà proposé pour certains types de véhicules des surtapis amovibles qui sont fixés de façon satisfaisante du point de vue de la sécurité à l'aide de boutons à pression métalliques. Le surtapis comporte un certains nombre de boutons qui doivent être amenés en concordance avec des contreboutons fixés au tapis. Pour l'utilisateur, il peut être difficile de replacer en concordance exacte le bouton et le contrebouton. Un élément métallique de ce type revient assez cher pour le montage en place (perçage du tapis et du surtapis et montage) et doit être traité pour éviter la rouille. Le frottement au contact du pied peut provoquer rapidement une usure du traitement superficiel de protection.

La fabrication en chaîne des véhicules rend nécessaire une solution simple et flexible pour laquelle l'utilisation de boutons rendant nécessaire le perçage et une fixation des boutons ne constitue pas une réponse idéale.

L'inconvénient principal de ce type de solution se manifeste cependant au moment du recyclage du surtapis et du tapis de sol. Un élément métallique étant incompatible avec un recyclage de matières polymériques, les boutons doivent être séparés préalablement au recyclage.

En outre l'inconvénient des montages fixes est de ne pas permettre au chauffeur d'adapter le positionnement de l'équipement selon ses souhaits.

Des solutions moins onéreuses et destinées à la seconde monte ont été proposées dans le commerce sous forme de surtapis pourvus d'un envers granuleux ou d'une mousse, l'envers étant destiné à éviter un glissement du surtapis. On constate à l'usage que ce type de tapis se déforme et surtout glisse sous les pédales entraînant des risques d'accident.

On observe qu'en fait le surhabillage du type surtapis ou talonnette notamment subit de la part du talon du chauffeur essentiellement à la fois un effort d'enfoncement et de translation dans un sens perpendiculaire à l'enfoncement.

Une solution permettant de combiner l'amovibilité du surhabillage et le maintien en place lors de l'usage normal devrait idéalement utiliser au moins les faits précités.

Le document DE-3113637 décrit un élément sous forme de bande qui est destiné à assembler bord à bord deux revêtements de sols, en particulier des revêtements de sols présentant une grande surface de 12 à 16 m² et destinés à être disposés dans des salles de sport par exemple.

La pose de ces revêtements de sols est permanente et ils ne doivent normalement pas être prévus de les rendre amovibles.

De plus, la masse de ces revêtements de sols est particulièrement importante et facilite par conséquent la pose de tels revêtements.

Par ailleurs, le document US-A-4 748 063 décrit un élément de surhabillage de véhicule selon le préambule de la revendication 1, pourvu sur son envers d'une surface agrippante comportant des aspérités tronconiques. Pour obtenir la fixation de l'élément de surhabillage, la surface agrippante doit coopérer avec une surface correspondante du tapis de sol, présentant elle-même des aspérités tronconiques.

### Buts visés par l'invention

L'invention vise essentiellement à porter remède aux inconvénients précités et en particulier de fournir des équipements de surhabillage de véhicules, à la fois amovibles notamment en vue de leur nettoyage et ne glissant pas lors de leur utilisation.

Un but complémentaire de l'invention est de profiter de manière aussi efficace que possible du caractère spécifique d'adhérence du tapis ou de la moquette réalisé en des matières aiguilletées.

### Eléments caractéristiques principaux de l'invention

Selon l'invention, il est proposé un élément de surhabillage de véhicules automobiles caractérisé en ce qu'il est pourvu sur son envers d'un ruban auto-agrippant du type "champignon".

Un tel surhabillage peut être posé directement sur le tapis ou moquette du type aiguilleté.

Pour le tapis du type tuft, il est nécessaire de pourvoir le tapis dans une zone suffisamment large d'une partie velours, assurant un bon accrochage du ruban auto-agrippant.

Le ruban auto-agrippant et le cas échéant le velours peuvent être fixés de manière particulièrement simple par collage in situ à l'aide d'une colle du type hot melt par exemple ou peuvent être préencollés.

Toutes les matières utilisées sont en principe recyclables, y compris les colles.

L'envers agrippant du type "champignon" présente la propriété particulièrement intéressante pour le type d'application de l'invention que l'effet de "talonnage" imprimé par l'utilisateur enfonce le ruban auto-agrippant dans le tapis en rendant pratiquement impossible le déplacement latéral du surhabillage. En revanche, un mouvement manuel consistant à soulever le surhabillage par rapport à son support permet facilement de dégager le surhabillage pour le séparer et procéder par exemple à son nettoyage.

La remise en place est aisée sans que l'on doive chercher une concordance absolue du type de celle qui est nécessaire pour les boutons et contre-boutons.

Une transposition de position selon le souhait de l'utilisateur est également réalisable sans difficulté.

La technique de l'invention est applicable aussi bien à un surtapis qu'à une talonnette.

L'invention sera décrite plus en détail dans une forme d'exécution préférée d'un montage d'une talonnette et d'un surtapis donnée à titre de forme d'exécution descriptive sans caractère limitatif.

### Brève description des dessins

La figure 1 représente schématiquement les bandes auto-agrippantes du type champignon et les bandes velours correspondantes.

La figure 2 représente une vue d'une talonnette fixée sur un surtapis, lui-même fixé sur le tapis selon la présente invention.

### Description d'une forme d'exécution préférée de l'invention

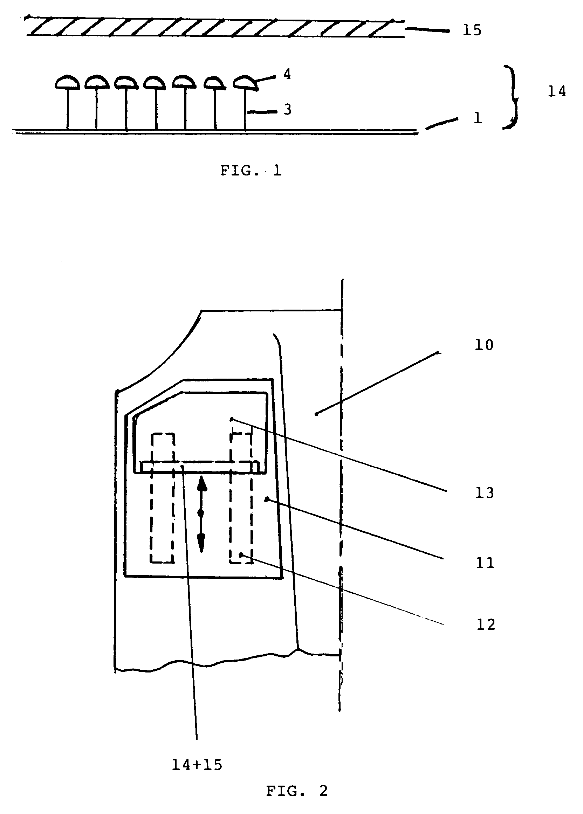

La figure 1 représente le ruban auto-agrippant du type champignon qui est constitué d'un support 1 en polyamide comportant des poils 3 présentant à son extrémité supérieure une excroissance 4 affectant la forme de champignons d'une hauteur de l'ordre d'un millimètre. Ces poils sous forme de champignon sont réalisés en polypropylène.

Selon une forme d'exécution préférée, le ruban auto-agrippant sera fixé à une bande de type velours qui se présente de préférence sous forme de maille grattée pour une composition 100% polyamide.

Ces produits sont des produits courants dans l'industrie textile et à titre d'exemple on peut citer les produits CRIC W 10373 pour des rubans agrippants et CRAC 10192 pour les bandes velours de la firme Louison.

La figure 2 représente un tapis de sol 10 de type aiguilleté qui est fixé à la caisse de l'automobile devant et sous le siège du conducteur.

Sur ce tapis est disposé un surtapis 11 qui comporte sur son verso deux rubans auto-agrippants 12 de type champignon. Dans ce cas il n'est pas nécessaire de disposer de bandes type velours sur le tapis de sol 10 pour fixer les rubans auto-agrippants 12 du surtapis 11. En effet, ceux-ci peuvent directement s'agripper aux poils du tapis de sol 10.

Selon la forme d'exécution représentée à la figure 2 le surtapis peut avantageusement être disposé de manière adéquate sur le tapis de sol 10 sans que l'on doive chercher une concordance exacte avec une bande type velours.

En outre on peut ajuster la position du surtapis selon les désirs de l'utilisateur, par exemple en fonction de sa taille.

Les deux bandes type rubans auto-agrippants 12 sont disposées longitudinalement de part et d'autre sous le surtapis 11. Cette disposition permet d'éviter que le surtapis ne se déplace aussi bien longitudinalement que transversalement.

Selon la forme d'exécution représentée à la figure 2 une talonnette 13 est en outre disposée au dessus du surtapis 11. La talonnette 13 est fixée au surtapis 11 à l'aide d'un ruban auto-agrippant 14 disposé au verso de la talonnette. De préférence sur le dessus du surtapis une bande de type velours 15 est également fixée afin d'agripper les poils type champignon du ruban auto-agrippant. Ceci permet une meilleur adhérence de la talonnette sur le surtapis car celui-ci est généralement constitué d'une moquette tuft.

Le ruban auto-agrippant 14 est placé de préférence de manière transversale sur la partie inférieure et au verso de la talonnette 13. Ceci permet d'éviter que sous l'effet du "talonnage", la talonnette ne se déplace. Plus spécifiquement cet effet de talonnage contribue avantageusement à renforcer l'effet de fixation de la talonnette 13 sur le surtapis 11.

De manière générale les bandes agrippantes ou de velours sont fixées sur leur support par collage in situ ou par préencollage.

Selon la forme d'exécution représentée à la figure 2, lors des opérations de nettoyage, on désolidarise successivement le surtapis 11 du tapis de sol 10 et la talonnette 13 du surtapis 11. Ceci permet de nettoyer séparément les différents éléments par exemple la talonnette au jet d'eau et le surtapis à l'aspirateur.

Il est bien entendu que la forme d'exécution représentée à la figure 2 n'est nullement limitative et que l'homme de l'art pourra envisager toutes les modifications selon l'usage auquel les éléments de surhabillage sont destinés. Par exemple on peut envisager de munir la place passager de surtapis exempt de talonnette, ou bien de munir la place du conducteur d'un surtapis plus classique comprenant une talonnette soudée au surtapis, le surtapis étant fixé au tapis de sol à l'aide rubans auto-agrippants.

De même, on peut envisager de placer un surtapis classique à l'aide de rubans auto-agrippants sur un tapis de sol qui lui-même est pourvu d'une talonnette soudée au tapis de sol.

## Revendications

1. Elément de surhabillage (11,13) de véhicule caractérisé en ce qu'il est pourvu sur son envers d'un ruban auto-agrippant (12,14) du type champignon (13,4).

2. Elément de surhabillage (11,13) selon la revendication 1 caractérisé en ce que le ruban auto-agrippant (12,14) est apte à se fixer directement sur un tapis de sol (10) de type aiguilleté.

3. Elément de surhabillage (11,13) selon la revendication 1 caractérisé en ce que le ruban auto-agrippant (12,14) se fixe sur une partie velours correspondante (15), la partie velours (15) étant elle même fixée sur un support, de préférence une moquette type tuft.

4. Elément de surhabillage (11,13) selon l'une quelconque des revendications précédentes caractérisé en ce que le ruban auto-agrippant (12,14) et le cas échéant la partie velours correspondante (15) sont fixés par collage in situ à l'aide d'une colle du type hot melt ou sont préencollés.

5. Elément de surhabillage (11,13) selon l'une quelconque des revendications précédentes caractérisé en ce que l'élément de surhabillage (11,13) lui-même, le ruban auto-agrippant (12,14) et le cas échéant la partie velours correspondante (15) sont constitués de matières polymériques recyclables.

6. Elément de surhabillage (11,13) selon l'une quelconque des revendications précédentes caractérisé en ce qu'il se présente sous la forme de surtapis (11) ou de talonnette (13).

## Claims

1. Overcovering element (11, 13) for a vehicle, characterized in that it is provided on its reverse side with a self-gripping strip (12, 14) of the mushroom type (13, 4).

2. Overcovering element (11, 13) according to Claim 1, characterized in that the self-gripping strip (12, 14) is capable of being fixed directly to a floor carpet (10) of the needle-punched type.

3. Overcovering element (11, 13) according to Claim 1, characterized in that the self-gripping strip (12, 14) is fixed to a corresponding pile-fabric part (15), the pile-fabric part (15) being itself fixed to a backing, preferably a mat of the tufted type.

4. Overcovering element (11, 13) according to any one of the preceding claims, characterized in that the self-gripping strip (12, 14) and, where necessary, the corresponding pile-fabric part (15) are fixed by in situ bonding with the aid of an adhesive of the hot-melt type or are precoated with adhesive.

5. Overcovering element (11, 13) according to any one of the preceding claims, characterized in that the overcovering element (11, 13) itself, the self-gripping strip (12, 14) and, where necessary, the corresponding pile-fabric part (15) consist of recyclable polymeric materials.

6. Overcovering element (11, 13) according to any one of the preceding claims, characterized in that it is in the form of an overcarpet (11) or a heel-piece (13).

## Patentansprüche

1. Bodenbelagelement (11, 13) für Fahrzeuge, dadurch gekennzeichnet, daß es auf seiner Rückseite mit einem selbsthaftenden Streifen (12, 14) vom Pilz-Typ (13, 4) versehen ist.

2. Bodenbelagelement (11, 13) nach Anspruch 1, dadurch gekennzeichnet, daß der selbsthaftende Streifen (12, 14) fähig ist, sich unmittelbar an einem Bodenteppich (10) vom Typ Nadelfilz zu befestigen.

3. Bodenbelagelement (11, 13) nach Anspruch 1, dadurch gekennzeichnet, daß der selbsthaftende Streifen (12, 14) sich an einem entsprechenden Stück Samt (15) befestigt, wobei das Stück Samt (15) seinerseits auf einer Unterlage, vorzugsweise einem Bodenteppich vom Typ Nadelflor befestigt ist.

4. Bodenbelagelement (11, 13) nach irgend einem der vorhergehenden Ansprüche, dadurch gekennzeichnet, daß der selbsthaftende Streifen (12, 14) und gegebenenfalls das entsprechende Stück Samt (15) durch in situ Kleben mit Hilfe eines Klebstoffs vom Typ hot melt befestigt sind oder daß sie vorverleimt sind.

5. Bodenbelagelement (11, 13) nach irgend einem der vorhergehenden Ansprüche, dadurch gekennzeichnet, daß das Bodenbelagelement (11, 13) selbst, der selbsthaftende Streifen (12, 14) und gegebenenfalls das entsprechende Stück Samt (15) aus wiederverwertbaren Polymermaterialen bestehen.

6. Bodenbelagelement (11, 13) nach einem der vorhergehenden Ansprüche, dadurch gekennzeichnet, daß er in Form eines Teppichbelags (11) oder einer Fersenunterlage (13) besteht.
